(19) Europäisches Patentamt
European Patent Office
Office européen des brevets

(11) **EP 2 623 835 B1**

(12) **FASCICULE DE BREVET EUROPEEN**

(45) Date de publication et mention de la délivrance du brevet:
**15.03.2017 Bulletin 2017/11**

(51) Int Cl.:
*F16L 37/46* (2006.01) *F28D 15/00* (2006.01)
*F16L 37/413* (2006.01)

(21) Numéro de dépôt: **13153372.1**

(22) Date de dépôt: **31.01.2013**

(54) **Raccord rapide et système de contrôle de température incorporant un tel raccord**

Schnellanschluss und Temperaturkontrollsystem, bei dem dieser Anschluss integriert ist

Quick connector and temperature-control system including such a connector

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2012 FR 1250915**

(43) Date de publication de la demande:
**07.08.2013 Bulletin 2013/32**

(73) Titulaire: **STAUBLI FAVERGES**
**74210 Faverges (FR)**

(72) Inventeurs:
• **Tiberghien, Alain-Christophe**
**74320 SEVRIER (FR)**
• **Durieux, Christophe**
**73200 GILLY SUR ISERE (FR)**
• **Morel, Frédéric**
**74210 LATHUILE (FR)**

(74) Mandataire: **Lavoix**
**62, rue de Bonnel**
**69448 Lyon Cedex 03 (FR)**

(56) Documents cités:
**EP-A1- 1 790 458 EP-A2- 0 184 799**
**DE-A1- 1 425 430 FR-A1- 2 724 710**
**FR-A5- 2 129 415 US-A- 2 727 759**
**US-A- 3 646 964**

**Description**

L'invention a trait à un raccord rapide tel qu'utilisé dans un conduit de circulation d'un fluide caloporteur pour le contrôle en température de pièces ou de composants. L'invention trouve notamment une application dans le domaine du contrôle en température de composants électroniques et dans le domaine du moulage par injection de pièces en matière synthétique, domaine dans lequel des moules doivent être refroidis.

Dans le cas d'une plaque d'échange thermique destinée à refroidir des composants électroniques, un conduit de circulation de fluide caloporteur est défini à l'intérieur de la plaque et destiné à être raccordé, par ses deux extrémités, à un conduit d'alimentation, lui-même relié à un groupe de fourniture de fluide caloporteur réfrigéré, ainsi qu'à un conduit d'évacuation de ce fluide. Lorsque le conduit de la plaque est déconnecté des conduits d'alimentation et d'évacuation, alors que des composants électroniques encore chauds transmettent des calories au fluide caloporteur confiné dans ce conduit, ce fluide caloporteur subit une élévation de température qui s'accompagne d'une augmentation de pression susceptible de causer des ruptures dans le conduit ou dans ses éléments de connexion. Des problèmes analogues se posent dans le domaine du moulage par injection où les moules sont soumis à des élévations de température alors que leur conduit de circulation de fluide caloporteur est isolé de l'extérieur.

US-A-4 447 040 propose de résoudre ces problèmes au moyen d'un élément de raccord qui comprend une soupape solidaire d'un piston monté avec possibilité de coulissement dans un corps. Lorsque l'élément de raccord est déconnecté et que sa pression interne augmente au-delà d'une valeur de seuil, le piston et la soupape sont déplacés vers l'extérieur à l'encontre de l'action d'un ressort, de façon à créer une fuite qui permet d'abaisser la pression interne de l'élément de raccord. Du fait de cette fuite, la pression à l'intérieur de l'élément de raccord diminue, au point que le piston et la soupape sont ensuite repoussés par le ressort en position d'étanchéité. Cette solution n'est pas satisfaisante dans la mesure où elle induit la perte de fluide caloporteur et des risques de pollution de l'environnement de l'élément de raccord. En particulier, une telle solution n'est pas applicable dans le domaine du refroidissement des composants électroniques qui ne peuvent pas être souillés par des rejets de fluide caloporteur.

On connait également de US-A-3 646 964 un raccord rapide dont l'élément femelle évacue un fluide en surpression par des évents, sans utiliser de piston mobile.

Il est par ailleurs connu de EP-A-1 790 458 de prévoir, dans un moule d'injection, un compensateur de volume formé d'un piston étanche et coulissant qui est en communication avec un conduit de circulation de fluide caloporteur à l'intérieur d'un moule. Lorsque le piston est soumis à une élévation de pression, il coulisse pour augmenter le volume disponible pour le fluide caloporteur, à l'encontre de l'action d'un ressort qui le ramène en position rétractée lorsque la pression diminue, notamment lorsque le conduit est à nouveau connecté à des conduits d'alimentation et d'évacuation. Le volume de compensation disponible dépend des caractéristiques du ressort et on ne peut exclure une déconnexion sous pression du circuit, c'est-à-dire sans mise à l'atmosphère préalable du circuit, ce qui a pour effet de déplacer le piston à l'encontre de l'action du ressort, avant même la complète déconnexion du conduit d'alimentation et du conduit d'évacuation. En outre, l'approche de EP-A-1 790 458 impose d'intégrer le compensateur de volume au moule d'injection en plus de ses éléments de raccord, ce qui rend ce matériel à la fois complexe et onéreux.

Par « compensation », on entend un ajustement du volume disponible pour le fluide confiné sous l'effet de la pression du fluide, de manière à limiter ses variations de pression.

Les solutions envisagées dans US-A-4 447 040 et EP-A-1 790 458 reposent sur l'action d'un ressort de rappel en position du piston. Le fluide dont la pression augmente doit lutter contre l'effort élastique exercé par ce ressort pour déplacer le piston et permettre la compensation. Ces matériels sont donc peu sensibles aux faibles variations de pression et peuvent manquer de fiabilité dans certaines applications.

C'est à ces inconvénients qu'entend plus particulièrement remédier l'invention en proposant un nouveau raccord rapide qui ne nécessite pas l'implantation d'un compensateur de volume additionnel et qui évite les risques de fuite, tout en autorisant une compensation permettant de limiter une augmentation de pression dans un conduit de circulation de fluide caloporteur déconnecté de son environnement.

A cet effet, l'invention concerne un raccord rapide comprenant un premier élément mâle ou femelle et un deuxième élément femelle ou mâle et complémentaire du premier élément, ces premier et deuxième éléments étant aptes à s'emmancher l'un dans l'autre selon un axe d'emmanchement, le premier élément comprenant un piston et une soupape d'obturation sélective d'un conduit interne du premier élément, ce conduit interne étant, en configuration d'utilisation, connecté fluidiquement en permanence à un conduit de circulation de fluide équipé du premier élément de raccord, la soupape étant mobile par rapport au piston et selon une direction parallèle à l'axe d'emmanchement, entre une position d'obturation plaquée contre un siège, où elle isole le conduit interne de l'extérieur du premier élément, et une position écartée de son siège, où l'écoulement de fluide à travers le raccord est possible, et le piston étant mobile selon l'axe d'emmanchement, en configuration désaccouplée du raccord, sous l'effet de la pression du fluide régnant dans le conduit interne du premier élément, entre une première position rétractée dans un corps du premier élément et une deuxième position avancée par rapport à ce corps dans laquelle le volume du conduit interne du premier élément est augmenté par rapport à son volume dans la première position. Conformément à l'invention, le raccord comprend des moyens d'étanchéité entre le piston et le corps du premier élément et au moins un organe de blocage sélectif du piston dans sa première position, cet organe étant mobile entre une première position active, où il bloque le piston dans sa première position, et une deuxième position effacée, où il ne s'oppose pas au déplacement du piston entre ses première et deuxième positions. Le raccord comprend, en outre, une bague de maintien mobile par rapport à l'organe de blocage entre une configuration de maintien de l'organe de blocage dans sa première position active et une configuration de libération de l'organe de blocage, dans laquelle la bague de maintien n'agit pas sur l'organe de blocage. Le déplacement de la bague de maintien par rapport à l'organe de blocage est tel que, lorsque le raccord est accouplé, la bague de maintien est dans sa configuration de maintien, lors du désaccouplement des premier et deuxième éléments, la bague de maintien est dans sa configuration de maintien au moins tant que la soupape n'est pas en position d'obturation du conduit interne du premier élément et, en configuration désaccouplée du raccord, la bague de maintien est dans sa configuration de libération. En outre, en configuration désaccouplée du raccord, la soupape est en position d'obturation du conduit interne. Enfin, les moyens d'étanchéité sont configurés pour, en configuration désaccouplée du raccord, isoler le conduit interne du premier élément de l'extérieur du premier élément, dans les première et deuxième positions du piston et lors de ses déplacements entre ces positions.

Grâce à l'invention, la soupape et les moyens d'étanchéité isolent efficacement le conduit interne du premier élément de raccord lorsque celui-ci est désaccouplé du deuxième élément de raccord, ce qui évite les fuites. En outre, comme le système de compensation est intégré dans le raccord, il n'est pas nécessaire de prévoir un compensateur dédié, ce qui simplifie la construction d'un système de contrôle de température incorporant un tel raccord.

Selon des aspects avantageux mais non obligatoires de l'invention, un tel raccord peut incorporer une ou plusieurs des caractéristiques suivantes prises dans toute combinaison techniquement admissible :

- La manoeuvre de désaccouplement des premier et deuxième éléments du raccord, induit que la bague de maintien libère l'organe de blocage, après que la soupape est parvenue en position d'obturation et sans autre intervention sur le raccord.
- L'organe de blocage fait partie du premier élément, alors que la bague de maintien fait partie du second élément.
- L'organe de blocage est mobile radialement, par rapport à l'axe d'emmanchement, entre sa première position active et sa deuxième position effacée.
- Le raccord comprend plusieurs organes de blocage répartis autour de l'axe d'emmanchement et mobiles, selon une direction centrifuge par rapport à l'axe d'emmanchement, entre leurs premières et deuxièmes positions respectives.

- Le piston a une première portion présentant une dimension extérieure ayant une première valeur et une deuxième portion où la dimension extérieure a une deuxième valeur supérieure à la première valeur et en ce que la première portion est en regard de l'organe de blocage dans la première position du piston, alors que la deuxième portion est en regard de l'organe de blocage dans la deuxième position du piston.
- La bague de maintien est montée sur un corps du deuxième élément et mobile, en translation par rapport à ce corps et parallèlement à l'axe d'emmanchement, et le raccord comprend des moyens de charge élastique de la bague en direction du premier élément lorsque les premier et deuxième éléments sont en cours d'accouplement, en configuration accouplée ou en cours de désaccouplement.
- La bague de maintien est apte à entourer radialement l'organe de blocage dans une configuration où elle s'oppose au passage de cet organe de sa première à sa deuxième position.
- En configuration accouplée des premier et deuxième éléments, la somme de la distance de recouvrement de la bague de maintien, sur laquelle la bague reste en prise avec le ou chaque organe de blocage et qui est mesurée parallèlement à l'axe d'emmanchement, avec un jeu axial entre cette bague et le corps du deuxième élément est supérieure à la course de fermeture de la soupape à partir de la configuration accouplée et parallèlement à l'axe d'emmanchement.
- Le piston comprend une première portion et une deuxième portion dont la surface radiale externe est de diamètre supérieur au diamètre de la surface radiale externe de la première portion, la deuxième portion étant logée dans un alésage central du corps et mobile dans cet alésage selon l'axe d'emmanchement et, lorsque le piston est dans sa première position rétractée, cette deuxième portion est disposée à proximité d'un épaulement interne et arrière du corps, alors qu'un épaulement interne et avant du corps forme une butée au déplacement du piston en direction de sa deuxième position avancée.
- La soupape est montée mobile à l'intérieur du piston alors que des moyens de rappel élastique disposés entre la soupape et le piston exercent sur la soupape un effort de rappel vers sa position d'obturation du conduit interne du premier élément en appui contre un siège défini sur le piston.
- Un corps du deuxième élément est pourvu d'un épaulement d'appui contre le piston du premier élément lors de l'accouplement des premier et deuxième éléments.
- Lors de l'accouplement, la soupape du premier élément est amenée en configuration passante avant le contact entre l'épaulement d'appui et le piston.

L'invention concerne également un système de contrôle de température comprenant, d'une part, une plaque d'échange thermique avec au moins une pièce ou un composant à refroidir, cette plaque définissant un conduit de circulation d'un fluide caloporteur et, d'autre part, au moins un conduit d'alimentation ou d'évacuation du conduit en fluide caloporteur. Ce système est caractérisé en ce que la connexion entre ces conduits est effectuée au moyen d'un raccord tel que mentionné ci-dessus dont le premier élément constitue une extrémité de raccordement du conduit de circulation et dont le deuxième élément constitue une extrémité de raccordement du conduit d'alimentation ou d'évacuation.

L'invention sera mieux comprise et d'autres avantages de celle-ci apparaîtront plus clairement à la lumière de la description qui va suivre d'un mode de réalisation d'un raccord rapide et d'un système de contrôle de température conformes à son principe, donnée uniquement à titre d'exemple et faite en référence aux dessins annexés dans lesquels :

- la figure 1 est une représentation schématique d'une plaque de refroidissement appartenant à un système de refroidissement conforme à l'invention, la plaque étant déconnectée de son alimentation/évacuation,
- la figure 2 est une vue à plus grande échelle du détail II à la figure 1,
- la figure 3 est une vue analogue à la figure 2 lorsqu'un élément de raccord est dans une deuxième configuration,
- la figure 4 est une coupe axiale en configuration désaccouplée des éléments d'un raccord conforme à l'invention, dont le premier élément est représenté sur les figures 1 à 3,
- la figure 5 est une demi-coupe axiale des éléments du raccord représenté à la figure 4, au début d'une étape d'accouplement lorsque le premier élément de raccord est dans la configuration de la figure 2,
- la figure 6 est une demi-coupe axiale des éléments du raccord représentés à la figure 6, au début d'une étape d'accouplement lorsque le premier élément du raccord est dans la configuration de la figure 3,
- la figure 7 est une coupe axiale des éléments mâle et femelle du raccord en cours d'accouplement, postérieurement à l'étape représentée à la figure 6
- la figure 8 est une coupe analogue à la figure 7 lorsque les éléments du raccord sont accouplés, suite au passage par la configuration de la figure 5 ou par les configurations des figures 6 et 7 et
- la figure 9 est une coupe analogue à la figure 7 lorsque les éléments du raccord sont en cours de désaccouplement.

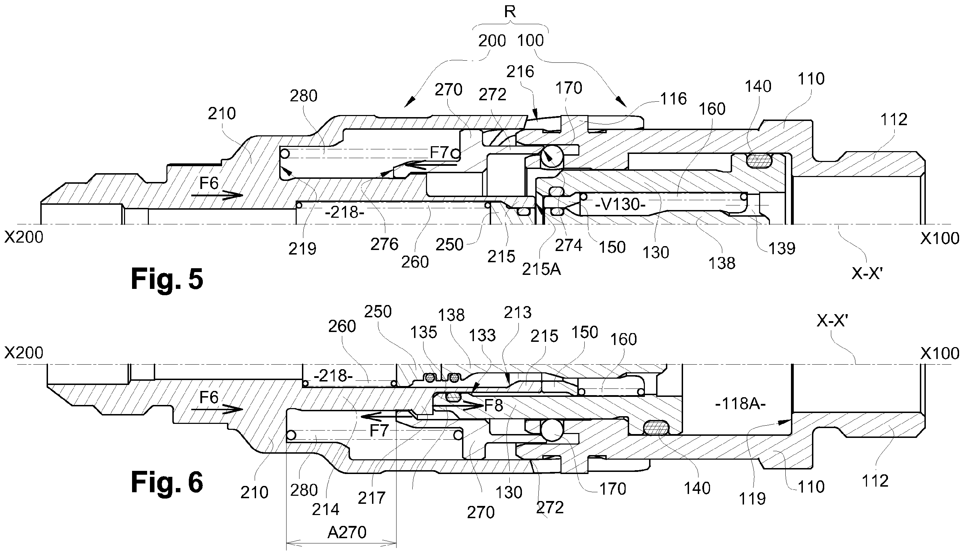

Pour la clarté du dessin, seuls les éléments de raccord sont représentés aux figures 5 et suivantes, sans la plaque de refroidissement ni le conduit d'alimentation associé.

Une plaque de refroidissement 2 en métal est utilisée pour refroidir un composant électronique dont la trace apparaît avec la référence 4 sur cette figure. Ce composant peut être un transistor bipolaire à grille isolée ou « IGBT » ou tout autre composant qui s'échauffe en cours de fonctionnement. La plaque 2 définit un conduit 6 de circulation d'un fluide caloporteur tel que de l'eau ou de l'huile.

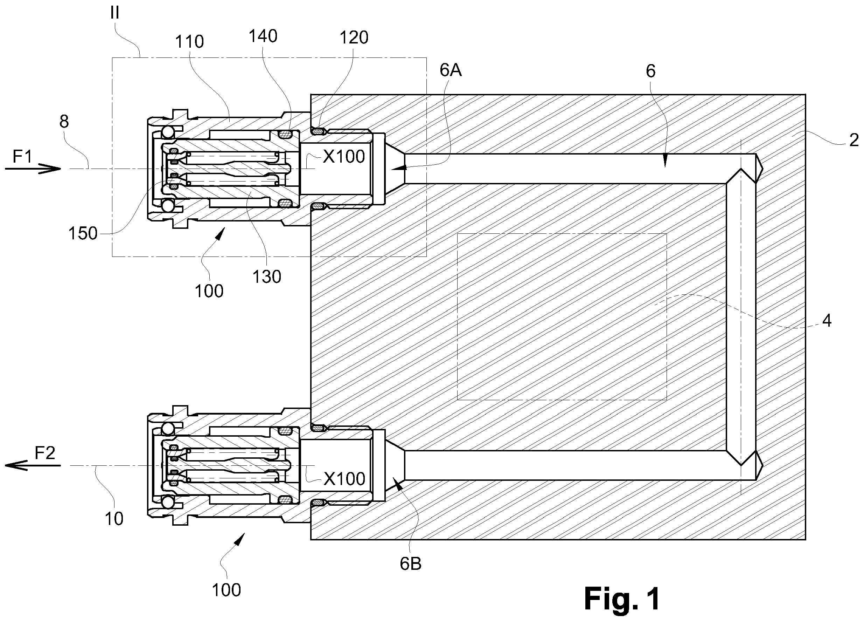

On note respectivement 6A et 6B les extrémités du conduit 6. Chacune des extrémités 6A et 6B est équipée d'un premier élément de raccord 100 permettant de raccorder, lorsque nécessaire, le conduit 6 à deux conduits 8 et 10 d'alimentation du conduit 6 en liquide caloporteur et d'évacuation de ce liquide caloporteur, comme représenté par les flèches F1 et F2 à la figure 1.

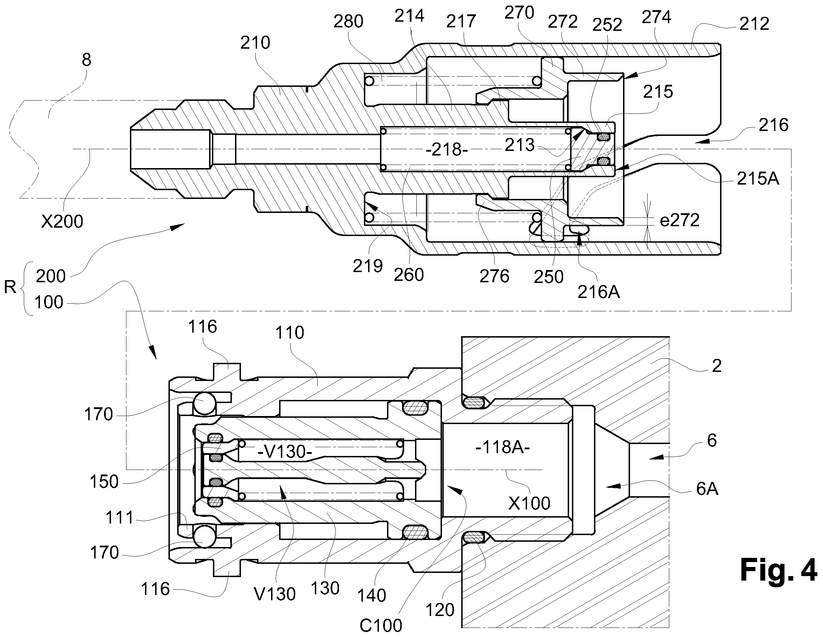

Comme cela ressort de la figure 4, le conduit 8 est équipé, à son extrémité aval 8A, d'un deuxième élément de raccord 200 qui constitue avec l'élément 100 monté sur l'extrémité 6A un raccord R conforme à l'invention.

Les deux premiers éléments de raccord 100 sont identiques et l'élément de raccord équipant l'extrémité amont du conduit 10, qui n'est pas représenté, est identique à l'élément 200 représenté aux figures 4 et suivantes.

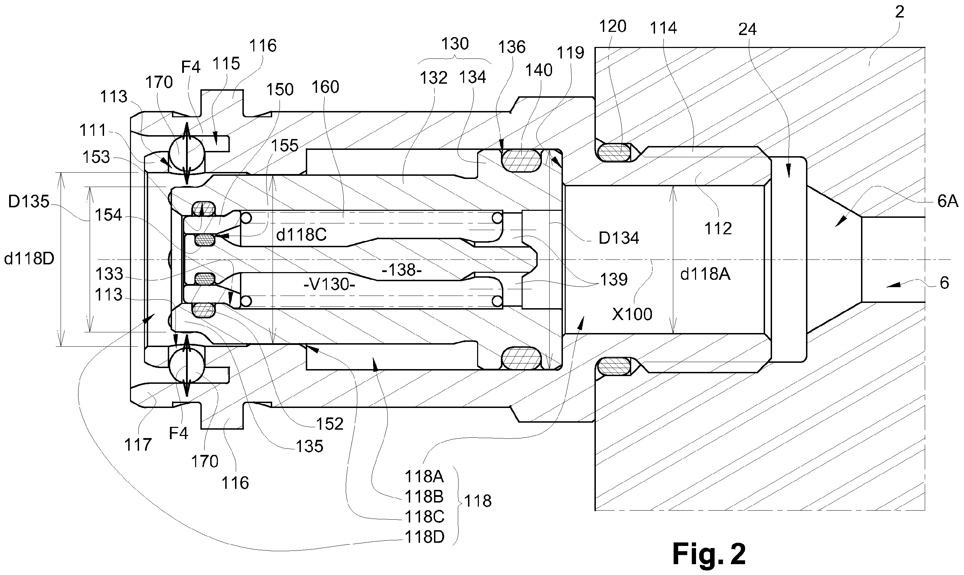

Le premier élément de raccord 100 représenté aux figures 2 et suivantes comprend un corps 110 dont une extrémité arrière 112 est pourvue d'un filet extérieur 114 permettant son vissage dans un orifice taraudé 24 de la plaque de refroidissement 2, cet orifice prolongeant l'extrémité 6A du conduit 6. Un joint 120 est intercalé entre l'extrémité 112 et le débouché de l'orifice 24 vers l'extérieur de la plaque 2. Il obture ainsi l'interstice entre l'orifice 24 et l'extrémité arrière 112.

Le corps 110 est également pourvu de deux pions de verrouillage 116 destinés à être engagés dans deux rainures de l'élément 200, dont une seule est visible sur les figures, avec la référence 216. Ces rainures, 216 et équivalente, sont ménagées dans un corps 210 de l'élément 200, plus particulièrement dans un manchon 212 destiné à entourer en partie le corps 110 en configuration accouplée des éléments 100 et 200. En ce sens, l'élément 100 est un élément mâle, alors que l'élément 200 est un élément femelle. Toutefois, une configuration inverse, où l'élément 100 est un élément femelle et l'élément 200 est un élément mâle, peut être envisagée.

L'élément 100 est centré sur un axe longitudinal X100 qui constitue un axe de symétrie circulaire pour le corps 110, à l'exception des pions 116 qui sont en saillie radialement vers l'extérieur du corps 110, en étant diamétralement opposés par rapport à l'axe X100 et à l'exception d'orifices logeant des billes de blocage, comme expliqué ci-après. Le deuxième élément 200 est centré sur un axe X200 qui constitue un axe de symétrie circulaire pour le corps 210 à l'exception des rainures 216 qui sont diamétralement opposées. Les axes X100 et X200 sont des axes longitudinaux et centraux respectifs pour les premiers éléments 100 et 200. En configuration d'accouplement, en configuration accouplée et en configuration de désaccouplement représentées aux figures 5 et suivantes, ces axes sont confondus et alignés avec un axe d'emmanchement X-X' des éléments 100 et 200 l'un dans l'autre. Ainsi, les explications données au sujet de la géométrie des éléments 100 et 200 par rapport à leurs axes respectifs X100 et X200 peuvent être transposées par rapport à l'axe d'emmanchement X-X'.

Le corps 110 de l'élément 100 définit un alésage central 118 centré sur l'axe X100 et étagé dont une première partie 118A, entourée par l'extrémité 112, est en permanence en communication fluidique avec le conduit 6. On note d118A le diamètre de la partie 118A qui est le diamètre intérieur de l'extrémité arrière 112.

A l'intérieur d'une deuxième partie 118B de l'alésage 118 est logé un piston 130 de compensation de volume susceptible de mouvements de translation, par rapport au corps 110, le long de l'axe X100. Le piston 130 est à section circulaire et sa surface radiale externe est étagée. Plus précisément, le piston 130 comprend une première portion 132 qui s'étend sur la plus grande partie de sa longueur et dont la surface radiale externe présente un premier diamètre D132, ainsi qu'une deuxième portion 134 disposée sur l'arrière du piston 130, c'est-à-dire du côté de la première partie 118A et dont la surface radiale externe présente un diamètre D134 dont la valeur est supérieure à celle du diamètre D132. En d'autres termes, la partie 134 est équipée d'une collerette annulaire externe qui augmente localement le diamètre externe du piston 130. Un joint 140 est disposé dans une gorge radiale externe 136 de la deuxième portion 134.

Par convention on considère que l'avant du premier élément 100 est tourné à l'opposé de la plaque 2, alors que l'arrière de cet élément est tourné vers cette plaque. Ainsi, la deuxième portion 134 est située à l'arrière du piston 130.

Dans la deuxième partie 118B, le diamètre intérieur d118B du corps 110 a une valeur légèrement supérieure à celle du diamètre D134.

L'alésage 118 comprend également une troisième partie 118C dans laquelle le diamètre intérieur du corps 110 a une troisième valeur d118C légèrement supérieure au diamètre D132 et une quatrième partie 118D qui constitue le débouché de l'alésage 118 vers l'extérieur de l'élément de raccord 100 et qui présente un diamètre d118D légèrement supérieur au diamètre d118C. Les diamètres d118B et d118C sont prévus pour permettre un guidage en translation du piston 130 dans les parties 118B et 118C de l'alésage 118. Le joint 140 est choisi avec des dimensions telles qu'il est comprimé par le corps 110 lorsque le piston 130 est en place dans l'alésage 118, de telle sorte que le joint 140 assure une fonction d'étanchéité au niveau de l'interstice entre la deuxième portion 134 et la partie 118B dans toutes les positions du piston 130 par rapport au corps 100.

Le piston 130 comprend un poussoir 138 centré sur l'axe X100 qui est également un axe central de symétrie pour le piston 130. Le poussoir 138 est relié à la portion 134 par quatre pattes dont deux sont visibles sur les figures avec la référence 139. On note V130 un volume annulaire défini autour du poussoir 138, à l'intérieur du piston 130. Le volume V130 débouche aux deux extrémités du piston 130, sauf lorsque son extrémité avant est obturée par une soupape 150. Le volume V130 forme, avec la partie 118A et la portion de la partie 118B située en arrière de la deuxième portion 134 du piston 130, plus précisément en arrière du joint 140, un conduit interne C100 de l'élément de raccord 100.

Le diamètre interne d130 du piston 130 est inférieur au diamètre d118A de la partie 118A de manière à ce qu'une surface longitudinale arrière 130B du piston 130 soit, dans toutes les positions du piston 130, au contact du fluide en communication avec le conduit 6.

La soupape annulaire 150 est intégrée au piston 130 et soumise à l'action d'un ressort de rappel 160 qui est en appui contre les pattes 139 et pousse cette soupape contre un siège 133 défini sur l'intérieur de la portion 132. En d'autres termes, la soupape 150 est montée mobile dans le piston 130 et plaquée par défaut contre le siège 133 sous l'action du ressort 160.

Le joint 140 isole fluidiquement le conduit interne C100, qui communique en permanence avec le conduit 6, de l'extérieur de l'élément 100 et ce, quelle que soit la position du piston 130 par rapport au corps 110, dès lors que la soupape 150 est en position d'obturation.

On note 135 l'extrémité avant du piston 130 opposée à la portion 134. L'extrémité 135 présente un diamètre externe D135 réduit par rapport au diamètre D132.

Un joint 152 est monté dans une gorge radiale interne 153 de l'extrémité 135, alors qu'un autre joint 154 est monté dans une gorge radiale externe 155 de l'extrémité avant du poussoir 138. Les joints 152 et 154 assurent l'étanchéité de la fermeture de la soupape 150 en configuration plaquée de la soupape 150 contre son siège 133.

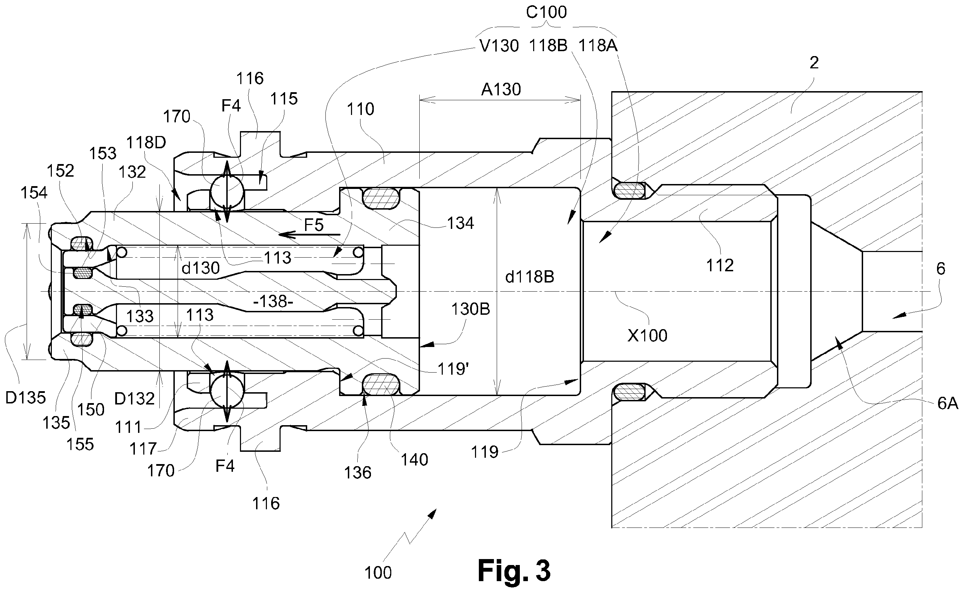

Par ailleurs, le corps 110 est pourvu de huit orifices 113 qui sont régulièrement répartis autour de l'axe X100 et qui relient radialement la partie 118D de l'alésage 118 avec une gorge 115 ménagée dans l'extrémité avant 117 du corps 110. Cette gorge 115 débouche vers l'avant du corps 110. Une bille 170 est disposée dans chacun des orifices 113 et chaque bille 170 peut avoir un mouvement de déplacement radial par rapport aux axes X100 et X-X', dans le sens des doubles flèches F4 aux figures 2 et 3 car chaque bille 170 peut être plus ou moins engagée dans la gorge 115 et dans la partie 118D de l'alésage 118. Les billes 170 sont maintenues dans les orifices 113, bloquées radialement par l'extrémité avant 117 et par le piston 130 monté dans le corps 110. On note 111 la partie annulaire du corps 110 dans laquelle sont définis les orifices 113 et qui sépare la partie 118D de l'alésage 118 de la gorge 115.

Dans la configuration des figures 1 et 2, le piston 130 est en position rétractée dans le corps 110 avec l'extrémité 135 du piston 130 radialement alignée, le long de l'axe X100, avec les billes 170. Dans cette configuration, le piston 130 est en appui sur l'arrière contre un épaulement interne et arrière 119 du corps 110. Dans cette configuration où le conduit 6 est obturé par les deux éléments de raccord 100 déconnectés représentés à la figure 1, si le composant IGBT 4 est chaud, au point d'élever la température de la plaque d'échange 2, la température du fluide caloporteur dans le conduit 6 augmente. Dans ces conditions, la pression dans le conduit interne C100 tend à augmenter, ce qui induit un déplacement du piston 130 vers la gauche des figures 2 et 3, c'est-à-dire vers l'avant de l'élément de raccord 100, avec la convention ci-dessus. Le piston 130 peut se déplacer jusqu'à la position de la figure 3 où il est en saillie par rapport au corps 110, le long de l'axe X100, c'est-à-dire dans une position avancée par rapport à celle de la figure 2, position dans laquelle le conduit interne C100 qui contient du fluide caloporteur a un volume plus important que dans la configuration des figures 1 et 2. En d'autres termes, en cas d'élévation de température et de pression du fluide caloporteur dans le conduit 6, le piston 130 peut se déplacer pour augmenter le volume disponible pour le fluide caloporteur et limiter ainsi l'augmentation de pression de ce fluide à un niveau admissible par la plaque 2, c'est-à-dire pour laquelle la plaque 2 et les premiers éléments de raccord 100 ne sont pas altérés. Une portion de la partie 118B de l'alésage 118 disposée à l'arrière de la deuxième portion 134 complète alors la partie 118A pour accueillir le fluide caloporteur en provenance du conduit 6.

Ainsi, l'augmentation de pression du fluide caloporteur dans la partie 118A exerce un effort qui pousse l'ensemble formé du piston 130 et de la soupape 150 vers l'avant de l'élément 100. Ce déplacement du piston 130, dans le sens de la flèche F5, à la figure 3 a lieu sans fuite de liquide caloporteur puisque le joint 140 joue son rôle d'étanchéité entre le conduit interne C100 et l'extérieur et puisque la soupape est maintenue en position d'obturation, quelle que soit la position du piston 130, c'est-à-dire que la soupape est maintenue contre son siège 133 et est maintenue en position d'étanchéité dans son logement avec les joints 152 et 154 qui coopèrent avec la soupape 150 pour garantir l'absence de fuite autour de la soupape 150 depuis le conduit interne C100 vers l'extérieur du raccord. La soupape 150 reste plaquée sur son siège 133, sur toute la course de compensation du piston entre ses positions des figures 2 et 3. Ce déplacement a pour effet d'amener la première portion 132 du piston 130 en regard des orifices 113 et de chasser les billes 170 vers la gorge 115 qui peut alors les accueillir.

La course du piston 130 a une amplitude maximale A130 qui correspond au déplacement du piston 130 de sa position rétractée, à la figure 2, à sa position de la figure 3, en butée contre un autre épaulement 119' également ménagé par le corps 110. Dans cette construction, l'amplitude A130 est de l'ordre de 10mm alors que le diamètre d118B est de l'ordre de 15 mm.

On conçoit que, en fonction de l'élévation effective de pression dans le conduit 6, le déplacement du piston 130 peut n'intervenir que sur une partie de la course d'amplitude maximale A130. Dans ce cas, le piston 130 dépasse moins du corps 110 vers l'avant que dans la configuration représentée à la figure 3.

En configuration du conduit de circulation 6 obturé aux extrémités 6A et 6B, et en cas d'élévation de pression dans ce conduit, les pistons respectifs de chacun des deux éléments de raccord se déplaceront de manière sensiblement équivalente et simultanée en direction de leurs positions avancées respectives.

Le deuxième élément 200 est représenté en coupe à la figure 4, avec, en trait mixte, une partie du conduit 8. Le corps 210 définit un alésage central 218 dans lequel est montée une soupape 250 chargée élastiquement contre un siège correspondant 213 au moyen d'un ressort 260. La soupape est équipée d'un joint 252 qui vient en appui contre une surface radiale interne de la partie du corps 210 qui définit l'extrémité débouchante de l'alésage 218 et le siège 213.

Une bague de maintien 270 est montée, radialement à l'intérieur du manchon 212, autour de la portion 214 du corps 210 qui définit l'alésage 218. Cette bague 270 comprend une jupe 272 dont l'épaisseur radiale e272, par rapport à l'axe X200, est compatible avec l'introduction de cette jupe dans la gorge 115 de l'élément 100.

Lorsqu'il convient de connecter le conduit 6 avec le conduit d'alimentation 8 ou le conduit d'évacuation 10, c'est-à-dire d'accoupler les éléments 100 et 200, il faut préalablement s'assurer que la connexion se fera « hors pression », en mettant les conduits 6 et 8 à l'atmosphère. Puis l'élément complémentaire 200 est rapproché de l'élément 100 en tenant compte du fait que la plaque 2 est mobile. Selon la position du piston 130 de l'élément 100, entre la position rétractée de la figure 2 et la position avancée de la figure 3, les pions 116 de l'élément 100 s'engagent dans les rainures 216 de l'élément 200 avant ou après la mise en contact des éléments de clapeterie, c'est-à-dire des soupapes 150 et 250 et de leurs éléments de commande que sont le poussoir 138 et une partie avant 215 du corps 210 tournée vers l'élément 100 lors de l'accouplement.

Dans le cas où le piston est dans la position rétractée représentée aux figures 1 et 2, l'accouplement a lieu comme représenté à la figure 5. Dans cette configuration, les axes X200 et X100 sont alignés sur l'axe X-X' et l'élément 200 est rapproché de l'élément 100 avec un mouvement de translation axial dans le sens de la flèche F6. A ce mouvement de rapprochement des corps 210 et 110 s'ajoute ensuite un mouvement de rotation lié à la progression des pions 116 dans les rainures 216. Ce mouvement de translation a pour effet d'amener le bord libre 274 de la jupe 272 au contact des billes 170, qui peuvent être repoussées vers l'alésage 118D, et d'amener la bague 270 en butée contre l'extrémité avant 117, avec la bague 270 qui recouvre radialement les billes 170. Le maintien de l'effort d'emmanchement ou d'accouplement des éléments 100 et 200 l'un dans l'autre fait reculer la bague 270 par rapport au corps 210, dans le sens de la flèche F7, à l'encontre d'un effort élastique exercé par un ressort 280.

La partie avant 215 constitue une extrémité de la portion 214 du corps 210, à l'intérieur de laquelle est logée la soupape 250 en configuration d'obturation de l'alésage 218.

La poursuite du mouvement d'emmanchement ou d'accouplement des premier et deuxième éléments 100 et 200 a pour effet d'amener la face avant d'extrémité 215A de la partie 215 au contact de la soupape 150 que cette face avant 215A repousse alors à l'encontre de l'effort exercé par le ressort 160, avec la partie 215 qui vient au contact du joint 152 pour un raccordement étanche, sans fuite. De même, ce mouvement a pour effet d'amener le poussoir 138 au contact de la soupape 250 que le poussoir repousse à l'encontre de l'effort exercé par le ressort 260.

Le bord libre 274 de la jupe 272 est biseauté vers l'intérieur de telle sorte que, dans la position de la figure 5, l'effort de rappel élastique exercé par le ressort 280 est transmis aux billes 170 sous la forme d'un effort en partie centripète qui renvoie les billes 170 vers la partie 118D de l'alésage 118, ce qui est possible car la première portion 132 du piston 130 est en retrait à l'intérieur du corps 110 pour ne laisser subsister en regard des billes 170 que l'extrémité 135 de diamètre D135 réduit par rapport au diamètre d118C. Le volume libre entre la partie annulaire 111 et l'extrémité 135 accueille partiellement les billes 170 de manière à ce qu'elles ne dépassent plus radialement vers l'extérieur par rapport à la partie annulaire 111. La jupe 272 peut ainsi entourer radialement les billes 170, s'engager jusqu'au fond de la gorge 115 et venir en butée contre l'extrémité avant 117, alors que la poursuite du mouvement d'emmanchement éloigne les soupapes 150 et 250 de leurs sièges respectifs.

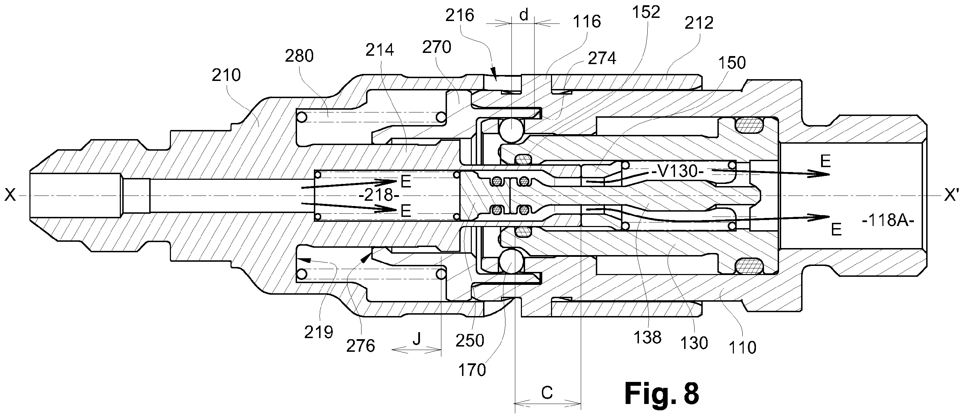

On arrive alors dans la configuration accouplée de la figure 8 où les soupapes 150 et 250 sont écartées de leurs sièges respectifs 133 et 213, de telle sorte que le raccord R formé des éléments 100 et 200 est passant et que du fluide caloporteur peut s'écouler à travers les alésages 218 et 118, en direction du conduit 6, comme représenté par les flèches d'écoulement E. La progression de la partie avant 215 dans le volume intérieur V130 du piston 130 et la progression du poussoir 138 dans l'alésage 218 sont possibles alors que la bague 270 est en appui contre l'extrémité avant 117 grâce à la course de déplacement de la bague 270 par rapport au corps 210.

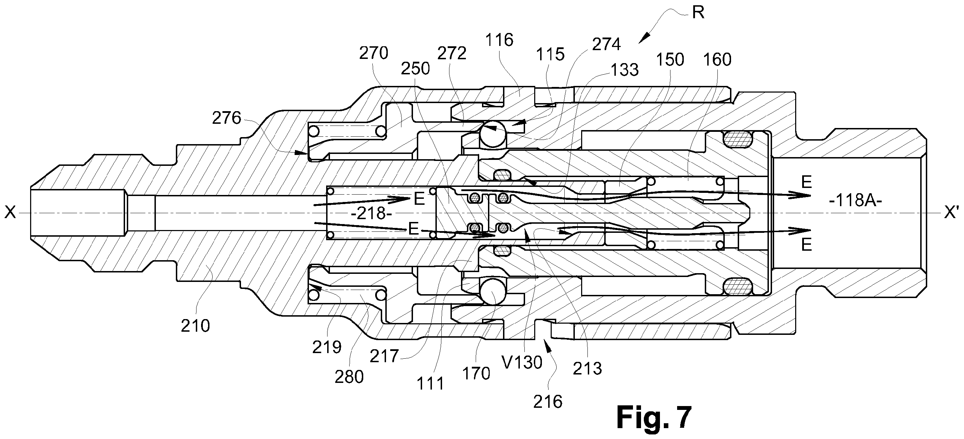

Lorsque le piston est en configuration avancée, comme représentée à la figure 3, avant l'accouplement des éléments 100 et 200, le premier contact entre ces éléments 100 et 200 a lieu au niveau de la face avant 215A et de la soupape 150, d'une part, du poussoir 138 et de la soupape 250, d'autre part. Dans ces conditions, le rapprochement des corps des deux éléments de raccord 100 et 200 ouvre le passage pour le fluide caloporteur dès le début de l'opération d'accouplement, ce qui diminue la pression à l'intérieur du conduit interne C100 auquel le conduit 6 est connecté en permanence. L'ouverture du passage du fluide se fait de manière étanche, sans fuite, grâce au joint 152 coopérant avec la parte 215. Lors du rapprochement des deux éléments de raccord, la bague de maintien 270 parvient au contact des billes 170, dans la configuration de la figure 6, alors que les soupapes 150 et 250 sont déjà décalées axialement par rapport à leurs sièges respectifs 133 et 213 mais que le piston 130 est encore en position avancée par rapport au corps 110. Puis, un épaulement 217 du corps 210 parvient au contact de l'extrémité avant 135 du piston 130. En poursuivant le déplacement axial du corps 210 dans le sens de la flèche F6 à la figure 6 et en direction du corps 110, l'épaulement 217 exerce sur le piston 130 un effort représenté par la flèche F8 qui, du fait de la pression diminuée dans le conduit interne C100, repousse ce piston en direction de l'épaulement 119 du corps 110. L'amplitude A270 de la course de déplacement de la bague 270 par rapport au corps 210, dans le sens de la flèche F7 à la figure 6, est mesurée axialement le long de l'axe X-X', entre la position de la bague 270 dans la configuration de la figure 6 et sa position de la figure 7 où la bague 270 vient en appui par son bord arrière 276 contre un épaulement 219 du corps 210.

Lors du mouvement de répulsion du piston 130 vers sa position rétractée, la bague 270 coulisse autour de la portion 214 du corps 210, ce qui est possible dans la mesure où l'amplitude A270 est supérieure ou égale à l'amplitude maximale A130 de déplacement du piston 130, c'est-à-dire à la course du piston 130 entre ses positions des figures 2 et 3.

Après avoir repoussé le piston 130 dans sa position rétractée, le corps 210 parvient dans la configuration de la figure 7 où les soupapes 150 et 250 sont décalées axialement de leurs sièges respectifs, de sorte que du fluide peut s'écouler dans le raccord R, comme représenté par les flèches E. La poursuite de l'accouplement fait alors passer les éléments 100 et 200 de la configuration de la figure 7 à celle de la figure 8, ce qui est possible puisque la bague 270 peut alors repousser les billes 170 radialement vers l'axe X-X' puisque l'extrémité avant 135 de petit diamètre D135 du piston 130 est alors alignée avec les orifices 113. Le mouvement de la bague 270 et des billes 170 est comparable à celui envisagé ci-dessus lors du passage de la configuration de la figure 5 à celle de la figure 8.

En d'autres termes, si l'accouplement est commencé alors que le piston 130 est dans la position rétractée de la figure 2, on passe par la configuration de la figure 5 pour atteindre la configuration de la figure 8 où le raccord R est passant et accouplé. Si le piston 130 est en position avancée par rapport au corps 110, comme représenté à la figure 3, on passe par la configuration de la figure 6 et la configuration de la figure 7 avant d'atteindre la configuration de la figure 8. Si le piston est en saillie dans une position intermédiaire entre les positions des figures 2 et 3, le fonctionnement est le même que celui expliqué en référence aux figures 3 et 6 à 8, au fait près que le piston n'est repoussé que sur une partie de sa course de compensation.

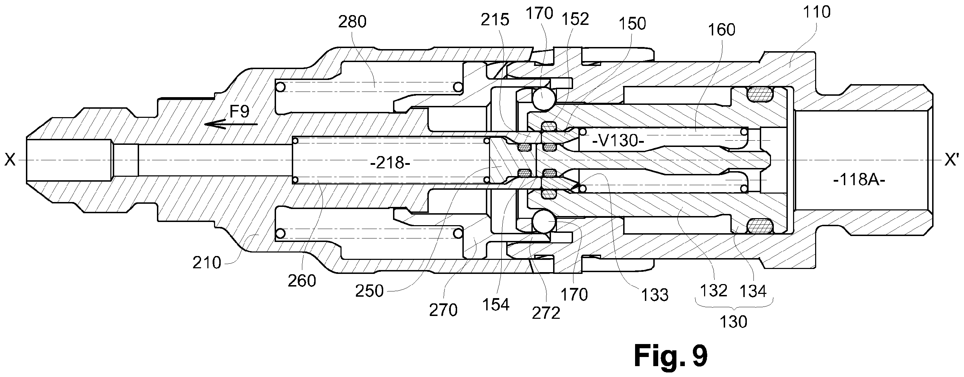

On relève que, dans les positions des figures 5 et 7 et dans la position de la figure 9 décrite ci-dessus, le piston 130 n'est pas en appui contre l'épaulement interne arrière 119 mais à proximité immédiate de celui-ci. En variante, il peut y avoir contact entre la surface 130B et l'épaulement 119 dans ces positions.

On procède de la même façon pour accoupler l'autre raccord R destiné à relier l'extrémité 6B et le conduit d'évacuation 10.

Ainsi, à la fin de la course de progression des pions 116 dans les rainures 216, lorsque ces pions se verrouillent dans des sièges correspondants 216A, c'est-à-dire lorsque les éléments 100 et 200 sont accouplés comme représenté à la figure 8, les billes 170 sont repoussées radialement vers l'axe X-X' et la jupe 272 entoure radialement les billes 170 qu'elle empêche de ressortir de la partie 118D de l'alésage 118. Dans cette configuration accouplée, les billes 170 sont dans leur position active et bloquent le piston 130 en position rétractée c'est-à-dire empêche tout mouvement du piston 130 en direction de sa position avancée.

Pour que les pions 116 se verrouillent dans des sièges correspondants 216A, les deux éléments de raccord 100 et 200 s'écartent axialement par rapport à leur position relative dans une configuration intermédiaire d'accouplement telle que la figure 7, si bien que, en configuration accouplée, l'épaulement 217 qui est venu en contact avec le piston 150 au moins dans la configuration où les éléments de raccord 100 et 200 étaient le plus rapprochés, n'est plus en contact avec le piston 130. Toutefois la bague 270 repoussée par son ressort 280 reste en recouvrement des billes 170.

Dans cette configuration, la bague 270 est écartée du corps 210, à l'encontre de l'effort généré par le ressort 280, sur une longueur correspondant à un jeu axial J entre la bague 270 et le corps 210.

On note d la distance axiale entre les centres des billes 170 et le bord avant libre 274 de la bague 270 dans cette configuration. Cette distance d constitue une distance de recouvrement de la bague 270 sur laquelle la bague 270 reste en prise, par sa jupe 272, avec les billes 170 depuis la configuration accouplée et dans un mouvement vers l'avant, à l'opposé de la plaque 2.

Dans cette configuration, on note C la course de fermeture de la soupape 150, c'est-à-dire la distance entre l'extrémité avant de la soupape 150 et le bord avant de la gorge 153 de réception du joint 152 ou le bord avant de la gorge 155 de réception du joint 154 qui est le plus éloigné de la soupape 150.

Lorsqu'il convient de désaccoupler les éléments 100 et 200, c'est-à-dire lorsque le conduit 6 de la plaque de refroidissement 2 doit être isolé de ses conduits d'alimentation et d'évacuation de fluide caloporteur 8 et 10, l'opérateur procède à la mise à l'atmosphère des conduits 8 et 10, puis au déverrouillage de chacun des deux raccords aux extrémités 6A et 6B du conduit. Plus particulièrement, en ce qui concerne le raccord représenté aux figures 2 et suivantes, l'opérateur déverrouille le système d'accrochage à baïonnette du raccord R selon l'invention et exerce sur le corps 210 un effort de déplacement axial dans le sens de la flèche F9 à la figure 9. Ce déplacement axial s'accompagne d'un mouvement de rotation lié à la géométrie des rainures 216. Ce déplacement axial a pour effet de retirer l'extrémité 215 du corps 210 du volume interne V130 du piston 130, de telle sorte que la soupape 150 est à nouveau plaquée contre son siège 133 par le ressort 160. On arrive alors dans la position de la figure 9 où la soupape 150 est en configuration d'obturation étanche, à proximité de son siège 133 et engagée radialement entre les joints 152 et 154. Lorsque la soupape 150 atteint cette position d'obturation, la jupe 272 entoure encore radialement les billes 170 de sorte que celles-ci ne peuvent pas sortir de la partie 118D de l'alésage 118, ce qui a pour conséquence que le piston 130 se trouve maintenu dans sa position rétractée à l'intérieur du corps 110. En d'autres termes, les billes 170 maintiennent le piston 130 en position rétractée à l'intérieur du corps 110 au cours du désaccouplement au moins tant que la soupape 150 n'est pas parvenue dans la position où elle obture de manière étanche le conduit interne C100.

Ceci est possible, entre autres, grâce au fait que la somme de la distance d et du jeu J est supérieure à la valeur de la course C. En d'autres termes, avec les notations qui précèdent, on a la relation :

$$d + J \geq C$$

En poursuivant le mouvement de désaccouplement avec le retrait du corps 210 par rapport au corps 110, dans le sens de la flèche F9, accompagné du mouvement de rotation de déverrouillage des baïonnettes, l'élément complémentaire de raccord 200 est détaché de la plaque 2 et la bague 270 ne contraint plus radialement les billes 170 et les libère. L'élément de raccord 100 se retrouve dans la position des figures 1 et 2 avec les billes qui peuvent s'effacer dans la gorge 115 et le piston 130 qui peut se déplacer pour venir en saillie, c'est-à-dire avancer, par rapport au corps 110, sous l'effet d'une élévation de température dans le conduit 6. Ainsi, la manoeuvre de désaccouplement des éléments 100 et 200 induit, par le seul déplacement de la bague 270 par rapport aux billes 170 et sans autre intervention d'un opérateur sur le raccord R, une libération automatique des billes 170 qui peuvent alors à nouveau s'engager dans la gorge 115. Au terme de la manoeuvre de désaccouplement, c'est-à-dire en configuration désaccouplée du raccord, la bague 270 est distante des billes 170 et n'agit pas sur ces organes de blocage que le piston peut repousser vers la gorge 115.

L'invention est indifférente du mode de construction de la soupape 150. En variante cette soupape 150 peut être pleine et le poussoir 138 peut être omis. Selon une autre variante, le poussoir 138 peut être fixé à l'intérieur du corps 110 par l'intermédiaire de pattes de type 139 et la soupape 150, coulissante autour du poussoir, peut être repoussée contre un siège ménagé sur le poussoir fixe 138. En configuration désaccouplée du raccord, la soupape est maintenue en position d'obturation, c'est-à-dire que la soupape reste plaquée contre son siège et conserve une position d'étanchéité.

L'invention permet donc d'obtenir une compensation efficace des éventuelles variations de pression dans le conduit 6, alors que celui-ci est déconnecté des conduits 8 et 10. Comme les moyens de compensation sont intégrés dans l'élément de raccord 100, il n'est pas nécessaire de prévoir un compensateur de volume distinct, ce qui simplifie la structure de la plaque 2 par rapport au dispositif connu de EP-A-1 790 458.

D'autre part, la compensation a lieu de façon étanche, sans fuite de fluide caloporteur, ce qui évite les pertes et les risques de pollution. En outre, la soupape 150 est positionnée par rapport à son siège 133 de telle sorte que la pression dans le conduit 6 et le conduit interne augmente l'effort d'appui de la soupape 150 sur son siège 133. Le volume de compensation disponible pour le conduit interne de l'élément de raccord 100 est bien défini et garanti du fait que la position rétractée du piston 130 le long de l'axe X-X' est garantie à la fermeture de la soupape du raccord et ce volume est efficacement isolé de l'extérieur, même après de nombreux accouplements/désaccouplements des éléments du raccord.

Comme les billes 170 maintiennent le piston 130 en position rétractée dans le corps 110 depuis la configuration accouplée au moins jusqu'à la fermeture étanche du conduit interne C100 du raccord par appui de la soupape 150 contre le siège 133, il n'est pas nécessaire d'utiliser un ressort pour rappeler le piston 130 en configuration rétractée ni d'agir sur le piston 130 pour le ramener en position rétractée lors du désaccouplement. Ainsi, lorsque les éléments 100 et 200 sont séparés l'un de l'autre, le piston 130 est effectivement mobile sous l'effet d'une augmentation de pression dans le conduit 6, sans avoir à vaincre la force d'un ressort comme dans les matériels connus.

Le maintien du piston 130 en position rétractée à l'intérieur du corps 110 et sa libération en position désaccouplée sont garanties par la cinématique de désaccouplement. En effet, du fait du retrait de l'élément 200, la bague 270 libère automatiquement les billes 170 après que la soupape 150 est parvenue en position d'obturation étanche du conduit interne. L'opérateur n'a pas à intervenir sur l'élément 100 ou sur une autre partie du dispositif de compensation de volume pour l'armer, au cours de ou après la déconnexion du raccord.

La cinématique d'accouplement garantit le recul du piston en position rétractée lorsqu'il n'est pas déjà dans cette position au début de l'accouplement. L'opérateur n'a donc pas à exercer une action spécifique sur l'élément de raccord 100 avant de l'accoupler avec l'élément de raccord 200, que ce soit lors d'une première connexion ou lors d'une connexion ultérieure.

L'effort exercé par l'opérateur sur le piston 130 lors de l'accouplement, dans le sens de la flèche F6, est plus important que l'effort élastique d'un ressort tel que celui agissant sur le piston dans EP-A-1 790 458, ce qui garantit un bon positionnement du piston 130 avant le désaccouplement.

Enfin, le blocage du piston 130 en position rétractée à l'intérieur du corps 110, au moyen des billes 170 et de la bague de maintien 270 qui entoure les billes 170 est compatible avec le mouvement de rotation nécessaire à l'accouplement des éléments 100 et 200 au moyen d'un système à baïonnette comprenant les pions 116 et les rainures 216 et confère une bonne compacité axiale au raccord.

Ainsi, la plaque 2 et les conduits 8 et 10, respectivement équipés des parties 100 et 200 des raccords R, constituent ensemble un système efficace de contrôle de la température du composant 4.

L'invention n'est pas limitée au mode de réalisation mentionné ci-dessus et différentes variantes peuvent être envisagées. Par exemple, les billes 170 peuvent être remplacées par un deuxième système à baïonnette permettant à l'opérateur d'armer le dispositif de compensation. Le déverrouillage d'une première baïonnette d'accouplement des deux éléments du raccord permet d'amener la soupape de l'élément de raccord en position d'obturation et alors d'accéder à une seconde baïonnette de verrouillage du piston en position rétractée. L'organe de maintien n'agit donc pas sur de l'organe de blocage en configuration de blocage du piston en position rétractée mais maintient l'organe de blocage dans cette configuration en empêchant l'opérateur d'accéder à l'organe de blocage, tel que le pion de la seconde baïonnette, et de le débloquer intempestivement, c'est-à-dire alors que la soupape n'a pas atteint sa position d'obturation au cours du désaccouplement.

D'autres organes de blocage que des billes peuvent être envisagés, par exemple un verrou transversal recouvert par une bague ou des doigts de verrouillage recouverts par une bague.

Le verrouillage des deux éléments 100 et 200 du raccord peut avoir lieu avec des moyens autres qu'un système à baïonnettes. En outre, les rainures des baïonnettes peuvent être formées sur l'élément 100 qui porte le piston, alors que les pions sont portés par l'élément complémentaire 200.

En fonction du volume de compensation à prévoir, notamment en fonction du volume total du conduit 6, seul un des raccords d'extrémité 100 de ce conduit peut être équipé d'un piston 130. En d'autres termes, l'invention peut n'être mise en oeuvre qu'au niveau d'une des extrémités du conduit 6.

L'invention peut être utilisée dans d'autres domaines que celui du refroidissement de composants électroniques, en particulier pour le refroidissement d'un moule d'injection de pièces en matériau synthétique. La notion de plaque couvre ici tout élément d'échange thermique pourvu d'un conduit de circulation de fluide caloporteur, indépendamment de sa géométrie, même si la majorité de ces éléments sont plans en pratique.

Sur les figures de la présente demande, les corps 110 et 210 sont représentés monobloc, dans un but de simplification. En pratique, ces corps peuvent être constitués de plusieurs parties assemblées ensemble, notamment par vissage. Le piston 100 et les corps 110 et 210 peuvent ne pas être à section circulaire.

En fonction de la construction du corps 110, la partie 118A de l'alésage 118 peut être fortement réduite, voire supprimée, auquel cas le conduit interne C100 comprend uniquement la portion arrière de la partie 118B et le volume V130.

Les caractéristiques des modes de réalisation et variantes envisagés ci-dessus peuvent être combinées entre elles.

## Revendications

1. Raccord rapide (R) comprenant un premier élément (100) mâle ou femelle et un deuxième élément (200) femelle ou mâle et complémentaire du premier élément, ces premier et deuxième éléments étant aptes à s'emmancher (F6) l'un dans l'autre selon un axe d'emmanchement (X-X'), le premier élément (100) comprenant un piston (130) et une soupape (150) d'obturation sélective d'un conduit interne (C100) du premier élément, le conduit interne étant, en configuration d'utilisation, connecté fluidiquement en permanence à un conduit (6) de circulation de fluide équipé du premier élément de raccord (100), la soupape étant mobile, par rapport au piston (130) et selon une direction parallèle à l'axe d'emmanchement (X-X'), entre une position d'obturation plaquée contre un siège (133), où elle isole le conduit interne (C100) de l'extérieur du premier élément (100), et une position écartée de son siège, où l'écoulement de fluide à travers le raccord est possible, et le piston (130) étant mobile selon l'axe d'emmanchement (X-X'), en configuration désaccouplée du raccord, sous l'effet de la pression du fluide régnant dans le conduit interne (C100) du premier élément, entre une première position rétractée dans un corps (110) du premier élément et une deuxième position avancée par rapport à ce corps dans laquelle le volume du conduit interne (C100) du premier élément est augmenté par rapport à son volume dans la première position,

    - le raccord (R) comprenant
    - des moyens d'étanchéité (140) entre le piston (130) et le corps (110) du premier élément (100),
    - au moins un organe (170) de blocage sélectif du piston (130) dans sa première position, cet organe étant mobile entre

    • une première position active, où il bloque le piston (130) dans sa première position, et
    • une deuxième position effacée, où il ne s'oppose pas au déplacement du piston entre ses première et deuxième positions et

    - une bague de maintien (270), mobile par rapport à l'organe de blocage (170) entre

    • une configuration de maintien de l'organe de blocage (170) dans sa première position active et
    • une configuration de libération de l'organe de blocage, dans laquelle la bague de maintien n'agit pas sur l'organe de blocage, le déplacement de la bague de maintien par rapport à l'organe de blocage étant tel que, lorsque le raccord (R) est accouplé, la bague de maintien est dans sa configuration de maintien, lors du désaccouplement des premier et deuxième éléments (100, 200), la bague de maintien est dans sa configuration de maintien au moins tant que la soupape (150) n'est pas en position d'obturation du conduit interne (C100) du premier élément (100) et, en configuration désaccouplée du raccord (R), la bague de maintien est dans sa configuration de libération, où

    - en configuration désaccouplée du raccord (R), la soupape (150) est en position d'obturation du conduit interne (C100), et où
    - les moyens d'étanchéité (140) sont configurés pour, en configuration désaccouplée du raccord, isoler le conduit interne (C100) du premier élément de l'extérieur du premier élément (100), dans les première et deuxième positions du piston (130) et lors de ses déplacements entre ces positions.

2. Raccord selon la revendication 1, **caractérisé en ce que** la manoeuvre de désaccouplement des premier et deuxième éléments (100, 200) du raccord (R), induit que la bague de maintien (270) libère l'organe de blocage (170), après que la soupape (150) est parvenue en position d'obturation et sans autre intervention sur le raccord (R).

3. Raccord selon l'une des revendications précédentes, **caractérisé en ce que** l'organe de blocage (170) fait partie du premier élément (100), alors que la bague de maintien (270) fait partie du second élément (200).

4. Raccord selon l'une des revendications précédentes, **caractérisé en ce que** l'organe de blocage (170) est mobile radialement (F4), par rapport à l'axe d'emmanchement (X-X'), entre sa première position active et sa deuxième position effacée.

5. Raccord selon la revendication 4, **caractérisé en ce qu'**il comprend plusieurs organes de blocage (170) répartis autour de l'axe d'emmanchement (X-X') et mobiles, selon une direction centrifuge par rapport à l'axe d'emmanchement (X-X'), entre leurs premières et deuxièmes positions respectives.

6. Raccord selon l'une des revendications précédentes, **caractérisé en ce que** le piston (130) a une première portion (135) présentant une dimension extérieure ayant une première valeur (D135) et une deuxième portion (132) où la dimension extérieure a une deuxième valeur (D132) supérieure à la première valeur (135) et **en ce que** la première portion est en regard de l'organe de blocage (170) dans la première position du piston, alors que la deuxième portion (132) est en regard de l'organe de blocage dans la deuxième position du piston.

7. Raccord selon l'une des revendications précédentes, **caractérisé en ce que** la bague de maintien (270) est montée sur un corps (210) du deuxième élément (200) et mobile en translation, par rapport à ce corps, parallèlement à l'axe d'emmanchement (X-X') et **en ce que** le raccord (R) comprend des moyens (280) de charge élastique de la bague en direction du premier élément (100) lorsque les premier et deuxième éléments (100, 200) sont en cours d'accouplement, en configuration accouplée ou en cours de désaccouplement.

8. Raccord selon la revendication 7, **caractérisé en ce que** la bague de maintien (270) est apte à entourer radialement l'organe de blocage (170) dans une configuration où elle s'oppose au passage de cet organe de sa première à sa deuxième position.

9. Raccord selon l'une des revendications 7 ou 8, **caractérisé en ce qu'**en configuration accouplée des premier et deuxième éléments (200), la somme de la distance de recouvrement (d) de la bague de maintien (270), sur laquelle la bague reste en prise avec le ou chaque organe de blocage (170) et qui est mesurée parallèlement à l'axe d'emmanchement (X-X'), avec un jeu axial (J) entre cette bague et le corps (210) du deuxième élément est supérieure à la course de fermeture (C) de la soupape (150) à partir de la configuration accouplée et parallèlement à l'axe d'emmanchement.

10. Raccord selon l'une des revendications précédentes, **caractérisé en ce que** le piston (130) comprend une première portion (132) et une deuxième portion (134) dont la surface radiale externe est de diamètre (D134) supérieur au diamètre (D132) de la surface radiale externe de la première portion (132), la deuxième portion (134) étant logée dans un alésage central (118) du corps (110) et mobile dans cet alésage selon l'axe d'emmanchement (X-X') et **en ce que**, lorsque le piston est dans sa première position rétractée, cette deuxième portion (134) est disposée à proximité d'un épaulement interne et arrière (119) du corps (110), alors qu'un épaulement interne et avant (119') du corps (110) forme une butée au déplacement du piston (130) en direction de sa deuxième position avancée.

11. Raccord selon l'une des revendications précédentes, **caractérisé en ce que** la soupape (150) est montée mobile à l'intérieur du piston (130) et **en ce que** des moyens (160) de rappel élastique disposés entre la soupape et le piston exercent sur la soupape un effort de rappel vers sa position d'obturation du conduit interne (C100) du premier élément (100) en appui contre un siège (133) défini sur le piston (130).

12. Raccord selon l'une des revendications précédentes, **caractérisé en ce qu'**un corps (210) du deuxième élément (200) est pourvu d'un épaulement (217) d'appui contre le piston (130) du premier élément lors de l'accouplement des premier (100) et deuxième éléments.

13. Raccord selon la revendication 12, **caractérisé en ce que**, lors de l'accouplement, la soupape (150) du premier élément (100) est amenée en configuration passante avant le contact entre l'épaulement d'appui (217) et le piston (130).

14. Système de contrôle de température comprenant :

    - une plaque (2) d'échange thermique avec au moins une pièce ou un composant (4) à refroidir, cette plaque définissant un conduit de circulation (6) d'un fluide caloporteur et,
    - au moins un conduit (8, 10) d'alimentation ou d'évacuation du conduit de circulation (6) en fluide caloporteur

**caractérisé en ce que** la connexion entre le conduit de circulation (6) et le conduit d'alimentation ou d'évacuation (8,10) est effectuée au moyen d'un raccord (R) selon l'une des revendications précédentes dont le premier élément (100) constitue une extrémité de raccordement du conduit de circulation (6) et dont le deuxième élément (200) constitue une extrémité de raccordement du conduit d'alimentation ou d'évacuation (8, 10).

**Patentansprüche**

1. Schnellkupplung (R), die ein erstes Element (100), ein Einsteck- oder ein Aufnahmeelement, und ein zweites Element (200), ein Aufnahme-oder Einsteckelement, komplementär zu dem ersten Element umfasst, wobei das erste und zweite Element geeignet sind, gemäß einer Eingreifachse (X-X') ineinanderzugreifen (F6), das erste Element (100) einen Kolben (130) und ein Ventil (150) zum selektiven Verschließen eines Innenkanals (C100) des ersten Elements umfasst, der Innenkanal in einer Verwendungsstellung dauerhaft strömungsmäßig an einen Kanal (6) zur Zirkulation eines Fluids angeschlossen ist, der mit dem ersten Kupplungselement (100) ausgerüstet ist, das Ventil in Bezug auf den Kolben (130) und gemäß einer Richtung parallel zur Eingreifachse (X-X') zwischen einer auf einem Sitz (133) aufliegenden Verschlussposition, in der es den Innenkanal (C100) des ersten Elements (100) nach außen abdichtet, und einer von seinem Sitz abgehobenen Position, in der die Strömung des Fluids durch die Kupplung möglich ist, beweglich ist, und der Kolben (130) gemäß der Eingreifachse (X-X') in der entkuppelten Stellung der Kupplung unter der Wirkung des in dem Innenkanal (C100) des ersten Elements herrschenden Drucks des Fluids zwischen einer in einen Körper (110) des ersten Elements zurückgezogenen ersten Position und einer zweiten in Bezug auf diesen Körper vorgerückten Position, in der das Volumen des Innenkanals (C100) des ersten Elements in Bezug auf sein Volumen in der ersten Position vergrößert ist, beweglich ist,

   - wobei die Kupplung (R) umfasst

     - Dichtungsmittel (140) zwischen dem Kolben (130) und dem Körper (110) des ersten Elements (100),
     - mindestens ein Element zum selektiven Blockieren des Kolbens (130) in seiner ersten Position, wobei dieses Element zwischen

       • einer ersten aktiven Position, in der es den Kolben (130) in seiner ersten Position blockiert, und
       • einer zweiten eingezogenen Position, in der es sich nicht einer Verschiebung des Kolbens zwischen seiner ersten und seiner zweiten Position entgegenstellt, beweglich ist, und

     - einen Haltering (270), der in Bezug auf das Blockierelement (170) zwischen

       • einer Haltestellung des Blockierelements (170) in seiner ersten aktiven Position und
       • einer Freigabestellung des Blockierelements, in der der Haltering nicht auf das Blockierelement einwirkt, beweglich ist,

   wobei die Verschiebung des Halterings in Bezug auf das Blockierelement derart ist, dass, wenn die Kupplung (R) gekuppelt ist, der Haltering in seiner Haltestellung ist, dass bei dem Entkuppeln des ersten und des zweiten Elements (100, 200) der Haltering zumindest solange das Ventil (150) nicht in der Position des Verschließens des Innenkanals (C100) des ersten Elements (100) in seiner Haltestellung ist und dass in der entkuppelten Stellung der Kupplung (R) der Haltering in seiner Freigabestellung ist,

   wobei
   - in der entkuppelten Stellung der Kupplung (R) das Ventil (150) in der Position des Verschließens des Innenkanals (C100) ist, und wobei
   - die Dichtungsmittel (140) ausgebildet sind, in der entkuppelten Stellung der Kupplung den Innenkanal (C100) des ersten Elements in der ersten und der zweiten Position des Kolbens (130) und bei seinen Verschiebungen zwischen diesen Positionen nach außen in Bezug auf das erste Element abzudichten.

2. Kupplung nach Anspruch 1, **dadurch gekennzeichnet, dass** der Vorgang des Entkuppelns des ersten und zweiten Elements (100, 200) der Kupplung induziert, dass der Haltering (270) das Blockierelement (170) freigibt, nachdem das Ventil (150) in die Verschlussposition und ohne einen anderen Eingriff auf die Kupplung (R) gekommen ist.

3. Kupplung nach einem der vorhergehenden Ansprüche, **dadurch gekennzeichnet, dass** das Blockierelement (170) Teil des ersten Elements (100) ist, während der Haltering (270) Teil des zweiten Elements (200) ist.

4. Kupplung nach einem der vorhergehenden Ansprüche, **dadurch gekennzeichnet, dass** das Blockierelement (170) radial (F4) in Bezug auf die Eingreifachse (X-X') zwischen seiner ersten aktiven Position und seiner zweiten zurückgezogenen Position beweglich ist.

5. Kupplung nach Anspruch 4, **dadurch gekennzeichnet, dass** sie mehrere Blockierelemente (170) umfasst, die um die Eingreifachse (X-X') herum verteilt sind und gemäß einer Zentrifugalrichtung in Bezug auf die Eingreifachse (X-X') zwischen ihren jeweiligen ersten und zweiten Positionen beweglich sind.

**6.** Kupplung nach einem der vorhergehenden Ansprüche, **dadurch gekennzeichnet, dass** der Kolben (130) einen ersten Bereich (135) mit einer Außenabmessung, die einen ersten Wert (D135) einnimmt, und einen zweiten Bereich (132), bei dem die Außenabmessung einen zweiten Wert (D132) größer als der erste Wert (135) einnimmt, aufweist, und dass der erste Bereich dem Blockierelement (170) in der ersten Position des Kolbens gegenübersteht, während der zweite Bereich (132) dem Blockierelement in der zweiten Position des Kolbens gegenübersteht.

**7.** Kupplung nach einem der vorhergehenden Ansprüche, **dadurch gekennzeichnet, dass** der Haltering (270) auf einem Körper (210) des zweiten Elements (200) montiert ist und in Bezug auf diesen Körper translatorisch parallel zur Eingreifachse (X-X') beweglich ist, und dass die Kupplung (R) Mittel (280) zur elastischen Vorspannung des Rings in Richtung des ersten Elements (100) umfasst, wenn das erste und zweite Element (100, 200) beim Zusammenkuppeln, in der gekuppelten Stellung oder beim Entkuppeln sind.

**8.** Kupplung nach Anspruch 7, **dadurch gekennzeichnet, dass** der Haltering (270) geeignet ist, radial das Blockierelement (170) in einer Stellung zu umgeben, in der er sich dem Übergang dieses Elements von seiner ersten Position in seine zweite Position entgegenstellt.

**9.** Kupplung nach einem der Ansprüche 7 oder 8, **dadurch gekennzeichnet, dass** in der gekuppelten Stellung des ersten und zweiten Elements (200), die Summe von der Überlappungslänge (d) des Halterings (270), über die der Ring im Eingriff mit dem oder jedem Blockierelement (170) bleibt und die parallel zur Eingreifachse (X-X') gemessen wird, und des axialen Spiels (J) zwischen diesem Ring und dem Körper (210) des zweiten Elements größer ist als der Verschließweg (C) des Ventils (150) von der gekuppelten Stellung aus und parallel zur Eingreifachse.

**10.** Kupplung nach einem der vorhergehenden Ansprüche, **dadurch gekennzeichnet, dass** der Kolben (130) einen ersten Bereich (132) und einen zweiten Bereich (134) aufweist, dessen radiale Außenfläche einen Durchmesser (D134) aufweist, der größer als der Durchmesser (D132) der radialen Außenfläche des ersten Bereichs (132) ist, wobei der zweite Bereich (134) in einer Mittelbohrung (118) des Körpers (110) gelagert und beweglich in dieser Bohrung gemäß der Eingreifachse (X-X') ist, und dass, wenn der Kolben in seiner ersten zurückgezogenen Position ist, dieser zweite Bereich (134) in der Nähe einer inneren und hinteren Schulter (119) des Körpers (110) angeordnet ist, während eine innere und vordere Schulter (119') des Körpers (110) einen Anschlag für die Verschiebung des Kolbens (130) in Richtung seiner zweiten vorgerückten Position bildet.

**11.** Kupplung nach einem der vorhergehenden Ansprüche, **dadurch gekennzeichnet, dass** das Ventil (150) beweglich im Inneren des Kolbens (130) montiert ist, und dass Mittel (160) zur elastischen Rückstellung, die zwischen dem Ventil und dem Kolben angeordnet sind, auf das Ventil eine Rückstellkraft in seine Position des Verschließens des Innenkanals (C100) des ersten Elements (100) in Anlage gegen einen an dem Kolben (130) festgelegten Sitz (133) ausüben.

**12.** Kupplung nach einem der vorhergehenden Ansprüche, **dadurch gekennzeichnet, dass** ein Körper (210) des zweiten Elements (200) mit einer Schulter (217) zur Auflage gegen den Kolben (130) des ersten Elements bei dem Zusammenkuppeln des ersten (100) und zweiten Elements versehen ist.

**13.** Kupplung nach Anspruch 12, **dadurch gekennzeichnet, dass** bei dem Zusammenkuppeln das Ventil (150) des ersten Elements (100) in eine Durchgangsstellung vor dem Kontakt zwischen der Auflageschulter (217) und dem Kolben (130) gebracht wird.

**14.** System zur Temperaturüberwachung, umfassend:

- eine Platte (2) für einen Wärmeaustausch mit mindestens einem zu kühlenden Teil oder einer zu kühlenden Komponente (4), wobei diese Platte einen Kanal (6) zur Zirkulation eines Kühlfluids begrenzt und
- mindestens einen Kanal (8, 10) für die Zufuhr von Kühlfluid zu dem Zirkulationskanal (6) oder zur Ausleitung des Kühlmittels aus dem Zirkulationskanal (6),

**dadurch gekennzeichnet, dass** die Verbindung zwischen dem Zirkulationskanal (6) und dem Zufuhr- oder Ausleitungskanal (8, 10) mittels einer Kupplung (R) nach einem der vorhergehenden Ansprüche durchgeführt wird, deren erstes Element (100) ein Anschlussende des Zirkulationskanals (6) bildet, und deren zweites Element (200) ein Anschlussende des Zufuhr- oder Ausleitungskanals (8, 10) bildet.

**Claims**

**1.** A quick connector (R) comprising a first male or female element (100) and a second female or male element (200) complementary to the first element, said first and second elements being able to fit (F6) into one another along a fitting axis (X-X'), the first element (100) comprising a piston (130) and a valve (150) for selectively closing off an inner duct (C100) of the first element, said inner duct being, in configuration of use, in permanent fluid connection with a fluid circulation duct (6) equipped with the first coupling element (100), the valve being able to move relative to the piston (130) and in a direction parallel to the fitting axis (X-X'), between a closing off position pressed against a seat (133), where it isolates the inner duct (C100) from the outside of said first element (100) and a position spaced away from its seat, where the flow of fluid through the connector is possible, and the piston (130) being movable along the fitting axis (X-X'), in the separated configuration of the connector, under the effect of the pressure of the fluid reigning in the inner duct (C100) of the first element, between a first position retracted into a body (110) of the first element and a second position forward relative to that body in which the volume of the inner duct (C100) of the first element is increased relative to its volume in the first position,

- the connector (R) comprising

- sealing means (140) between the piston (130) and the body (110) of the first element (100),
- at least one selective element (170) for locking the piston (130) in its first position, this element being movable between

- a first active position, where it blocks the piston in its first position,
- a second withdrawn position, where it does not oppose the movement of the piston between the first and second position thereof, and

- a maintaining ring (270) mobile with respect to the locking member (170) between

- a holding configuration of the locking element (170) in its first active position,
- a liberation configuration of the locking element, in which the maintaining ring does not act on the locking member, the displacement of the holding ring with respect to the locking element being such that, when the connector (R) is coupled, the maintaining ring is in its holding configuration, during separation of first and second elements (100, 200), the maintaining ring is in its holding configuration at least when the valve (150) is not in its position closing off the inner duct (C100) of the first element (100), and in the separated configuration of the connector (R), the maintaining ring is in its liberation configuration,

- where, in the separated configuration of the connector (R), the valve (150) is in the position closing off the inner duct (C100), and
- where sealing means (140) are configured for, in uncoupled configuration of the coupling, isolating the inner duct (C100) of the first element from the outside of the first element (100), in the first and second positions of the piston (130) and during the movements thereof between those positions.

2. The connector according to claim 1, **characterized in that** the maneuver to separate the first and second elements (100, 200) of the connector (R) causes the maintaining ring (270) to release the locking member (170), after the valve (150) has reached the closing off position and without any other intervention on the connector (R).

3. The connector according to one of the preceding claims, **characterized in that** the locking member (170) is part of the first element (100), while the maintaining ring (270) is part of the second element (200).

4. The connector according to one of the preceding claims, **characterized in that** the locking element (170) is radially movable (F4), relative to the fitting axis (X-X'), between its first active position, and its second, withdrawn position.

5. The connector according to claim 4, **characterized in that** it comprises several locking members (170) distributed around the fitting axis (X-X') movable, in a centrifugal direction relative to the fitting axis (X-X'), between the respective first and second positions.

6. The connector according to one of the preceding claims, **characterized in that** the piston (130) has a first portion (135) having an outer dimension with a first value (D135) and a second portion (132) where the outer dimension has a second value (D132) higher than the first value (135) and **in that** the first portion is across from the locking member (170) in the first position of the piston, while the second portion (132) is across from the locking member in the second position of the piston.

7. The connector according to one of the preceding claims, **characterized in that** the maintaining ring (270) is mounted on a body (210) of the second element (200) and translatable relative to that body and parallel to the fitting axis (X-X'), and **in that** the connector (R) comprises means (280) for elastically charging the ring toward the first element (100) when the first and second elements (100, 200) are undergoing coupling, in the coupled configuration or during separation.

8. The connector according to claim 7, **characterized in that** the maintaining ring (270) can radially surround the locking member (170) in a configuration where it opposes the passage of that member from its first to its second position.

9. The connector according to one of claims 7 or 8, **characterized in that** in the coupled configuration of the first and second elements (200), the sum of the overlap distance (d) of the maintaining ring (270), on which the ring remains engaged with the or each locking member (170) and which is measured parallel to the fitting axis (X-X'), with axial play (J) between the ring and the body (210) of the second element, is larger than the closing travel (C) of the valve (150) from the coupled configuration and parallel to the fitting axis.

10. The connector according to one of the preceding claims, **characterized in that** the piston (130) comprises a first portion (132) and a second portion (134) whereof the outer radial surface has a larger diameter (D134) than the diameter (D132) of the outer radial surface of the first portion (132), the second portion (134) being housed in a central bore (118) of the body (110) and movable **in that** bore along the fitting axis (X-X') and **in that**, when the piston is in its first retracted position, said second portion (134) is positioned near an inner and rear shoulder (119) of the body (110), whereas an inner and front shoulder (119') of the body (110) forms a stop for the movement of the piston (130) toward its second, forward position.

11. The connector according to one of the preceding claims, **characterized in that** the valve (150) is movably mounted inside the piston (130) and **in that** elastic return means (160) arranged between the valve and the piston exert a return force on the valve toward its position closing off the inner duct (C100) of the first element (100) bearing against a seat (133) defined on the piston (130).

12. The connector according to one of the preceding claims, **characterized in that** a body (210) of the second element (200) is provided with a bearing shoulder (217) against the piston (130) of the first element during coupling of the first (100) and second elements.

13. The connector according to claim 12, **characterized in that**, during coupling, the valve (150) of the first element (100) is brought into the open configuration before the contact between the bearing shoulder (217) and the piston (130).

14. A temperature control system comprising:

     - a heat exchange plate (2) with at least one part or component (4) to be cooled, on the one hand, said plate defining a circulation duct (6) for a coolant, and
     - at least one supply or discharge duct (8, 10) for the coolant circulation duct (6) on the other hand,

**characterized in that** the connection between the circulation duct (6) and the supply or discharge duct (8, 10) is achieved using a connector (R) according to one of the preceding claims whereof the first element (100) constitutes a connecting end of the circulation duct (6) and whereof the second element (200) constitutes a connecting end of the supply or discharge duct (8, 10).

**Fig. 1**

EP 2 623 835 B1

Fig. 2

17

Fig. 3

Fig. 4

**Fig. 5**

**Fig. 6**

**Fig. 7**

Fig. 8

**Fig. 9**

EP 2 623 835 B1

**EP 2 623 835 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4447040 A
- US 3646964 A

- EP 1790458 A